# EUROPEAN PATENT APPLICATION

(11) **EP 4 134 717 A1**
(43) Date of publication of application: **15.02.2023**
(21) Application number: 21939585.2
(22) Date of filing: 27.09.2021
(51) Int. Cl.: G02B 6/38

(54) **PREFABRICATED CONNECTOR, COUPLER, AND PREFABRICATED CONNECTOR ASSEMBLY**

(30) Priority: 26.05.2021 CN 202110574675
(71) Applicant: Zhongtian Broadband Technology Co., Ltd., Nantong, Jiangsu 226400 (CN); Jiangsu Zhongtian Technology Co., Ltd., Nantong, Jiangsu 226000 (CN)
(72) Inventor: MIAO, Dongqing, Nantong, Jiangsu 226400 (CN); SUN, Jianhua, Nantong, Jiangsu 226400 (CN); PU, Wei, Nantong, Jiangsu 226400 (CN); WANG, Jianbing, Nantong, Jiangsu 226400 (CN); ZHAO, Yuli, Nantong, Jiangsu 226400 (CN); LIU, Yuexiang, Nantong, Jiangsu 226400 (CN); YAO, Qiufei, Nantong, Jiangsu 226400 (CN)
(74) Representative: Boult Wade Tennant LLP
(86) International application number: PCT/CN2021/120845
(87) International publication number: WO 2022/247080

(57) **Abstract**

A prefabricated connector, a coupler and a prefabricated connector assembly. The prefabricated connector includes a connector housing assembly and a ferrule assembly, a mounting groove of the connector is provided on an outer wall at a first end of the connector housing assembly, and an elastic clamp (13) of the connector is further provided on the connector housing assembly. A coupler includes a coupler body and a sleeve (22). A clamping groove (2011) of the coupler is provided on an outer wall at a first end of the coupler body. After the prefabricated connector and the coupler are inserted to each other in place, a connection therebetween is achieved when a clamping part (1301) of the connector is partially situated in the mounting groove of the connector and partially situated in the clamping groove (2011) of the coupler; and the connection therebetween is released when a driving part (1302) of the connector drives the clamping part (1301) of the connector to be fully retracted into the mounting groove of the connector under an external force. The connection between the prefabricated connector and the coupler is convenient and fast.

## Description

### TECHNICAL FIELD

The present invention relates to the technical field of optical fiber connection and, in particular, to a prefabricated connector, a coupler and a prefabricated connector assembly.

### BACKGROUND

With large-scale construction of FTTH, the network is deeply affecting our lives. Deployment of optical fiber networks and arrangement of optical cables are extremely critical. At present, terminating ends of optical cables mainly adopt pigtail welding and on-site assembly of quick connectors. However, their mechanical property and environmental resistance are poor, which will cause dust and water to enter devices so that line transmission performance is severely affected. Therefore, a connector with convenient installation, good protective performance and excellent mechanical performance is needed to achieve connection between optical fibers, which can meet usage requirements and habits of both domestic and foreign consumers.

### SUMMARY

The present invention is aimed to provide a prefabricated connector, a coupler and a prefabricated connector assembly with convenient and fast installation, so as to alleviate the technical problems of difficulties in installation between the prefabricated connector and the coupler as well as high requirements for operating and maintenance personnel in the prior art.

The present invention provides a prefabricated connector adaptable to be docked with a coupler, including:
a connector housing assembly having a first end at which a ferrule assembly mounting cavity is formed and a second end at which an optical cable induction cavity in communication with the ferrule assembly mounting cavity is formed; and
a ferrule assembly arranged in the ferrule assembly mounting cavity and adaptable for inserted connection of an optical fiber of an optical cable introduced from the optical cable induction cavity;
where a mounting groove of a connector is provided on an inner wall at a first end of the connector housing assembly, an elastic clamp of the connector is further provided on the connector housing assembly, the elastic clamp of the connector includes a driving part of the connector and a clamping part of the connector, the driving part of the connector is located outside the connector housing assembly, the mounting groove of the connector is configured to engage with a clamping groove of the coupler on an outer wall of the coupler to form a locking groove, and the clamping part of the connector is partially situated in the mounting groove of the connector and partially situated in the clamping groove of the coupler when the elastic clamp of the connector is in a locked state; and the driving part of the connector is configured to drive the clamping part of the connector to be fully retracted into the mounting groove of the connector under an external force;
or
where a clamping groove of the connector is provided on an outer wall at the first end of the connector housing assembly, and the clamping groove of the connector is configured to engage with a mounting groove of the coupler on an inner wall of the coupler to form a locking groove.

The present invention provides a coupler adaptable to be docked with the prefabricated connector described above, including:
a coupler body provided with a sleeve mounting cavity therein; and
a sleeve mounted in the sleeve mounting cavity and adaptable for insertion of the ferrule of the ferrule assembly when the coupler is docked with the prefabricated connector;
where a clamping groove of the coupler is provided on an outer wall at a first end of the coupler body, and the clamping groove of the coupler is configured to engage with the mounting groove of the connector to form a locking groove;
or
a mounting groove of the coupler is provided on an inner wall at the first end of the coupler body, and an elastic clamp of the coupler is further provided on the coupler body; the elastic clamp of the coupler includes a driving part of the coupler and a clamping part of the coupler, the driving part of the coupler is located outside the coupler body, the mounting groove of the coupler is configured to engage with a clamping groove of the connector to form a locking groove, the clamping part of the coupler is partially situated in the mounting groove of the coupler and partially situated in the clamping groove of the connector when the elastic clamp of the coupler is in a locked state; and the driving part of the coupler is configured to drive the clamping part of the coupler to be fully retracted into the mounting groove of the coupler under an external force.

The present invention provides a prefabricated connector assembly, including: the prefabricated connector described above and the coupler described above.

After the prefabricated connector and the coupler provided in the present invention are inserted to each other in place, the connection therebetween is achieved when the clamping part of the elastic clamp is partially embedded in the prefabricated connector and partially embedded in the coupler, and the connection between the prefabricated connector and the coupler can be easily released as long as the driving part of the elastic clamp is driven during disassembly in such a manner that the clamping part of the elastic clamp is fully retracted into the mounting groove, rendering a smooth, fast and accurate operation and increasing operation convenience.

### BRIEF DESCRIPTION OF DRAWINGS

In order to illustrate technical solutions in embodiments of the present invention or the prior art more clearly, accompanying drawings used for description of the embodiments or the prior art will be briefly described hereunder. Apparently, the described drawings below are merely some embodiments of present invention. For persons of ordinary skilled in the art, other drawings may be obtained based on these drawings without any creative effort.
FIG. 1 is an exploded view of a prefabricated connector according to an embodiment of the present invention.
FIG. 2 is a cross-sectional view of the prefabricated connector according to an embodiment of the present invention.
FIG. 3 is an exploded view of a coupler according to an embodiment of the present invention.
FIG. 4 is a schematic view of assembly of the coupler according to an embodiment of the present invention.
FIG. 5 is a cross-sectional view of the coupler according to an embodiment of the present invention.
FIG. 6 is a cross-sectional view of a prefabricated connector assembly according to an embodiment of the present invention.
FIG. 7 is a schematic structural diagram of a guide member according to an embodiment of the present invention.
FIG. 8 is a schematic structural diagram of a tail stem according to an embodiment of the present invention.
FIG. 9 is a cross-sectional view of a crimping sleeve according to an embodiment of the present invention.
FIG. 10 is a schematic structural diagram of an inner protective sleeve according to an embodiment of the present invention.
FIG. 11 is a cross-sectional view of the inner protective sleeve according to an embodiment of the present invention.
FIG. 12 is a schematic structural diagram of a protective tail sleeve according to an embodiment of the present invention.
FIG. 13 is a cross-sectional view of the protective tail sleeve according to an embodiment of the present invention.
FIG. 14 is a cross-sectional view of an outer protective sleeve according to an embodiment of the present invention.
FIG. 15 is a front view of the outer protective sleeve according to an embodiment of the present invention.
FIG. 16 is a cross-sectional view along a B-B direction of FIG. 15.
FIG. 17 is a cross-sectional view of a bend-resistant tail sleeve according to an embodiment of the present invention.
FIG. 18 is a front view of a protective cap of the connector according to an embodiment of the present invention.
FIG. 19 is a cross-sectional view of an outer coupler end according to an embodiment of the present invention.
FIG. 20 is a schematic structural diagram of the outer coupler end from a first perspective according to an embodiment of the present invention.
FIG. 21 is a schematic structural diagram of the outer coupler end from a second perspective according to an embodiment of the present invention.
FIG. 22 is a schematic structural diagram of an inner coupler end from a first perspective according to an embodiment of the present invention.
FIG. 23 is a schematic structural diagram of the inner coupler end from a second perspective according to an embodiment of the present invention.
FIG. 24 is a cross-sectional view of a protective cap of the coupler according to an embodiment of the present invention.
FIG. 25 is a front view of the protective cap of the coupler according to an embodiment of the present invention.
FIG. 26 is a cross-sectional view at A-A in FIG. 25.
FIG. 27 is a schematic diagram of an elastic clamp of the connector/an elastic clamp of the protective cap of the coupler according to an embodiment of the present invention.
FIG. 28 is a schematic structural diagram of a lock nut according to an embodiment of the present invention.

Reference numerals: 1-guide member; 101-guide key; 2-inner casing of guide member; 3-ferrule; 4-elastic member; 5-tail stem; 501-arc-shaped boss; 502-opening slot; 6-crimping sleeve; 601-thread; 7-inner protective sleeve; 701-annular clamping platform; 702-annular clamping part; 703-boss catching groove; 704-second abutment step; 705-fourth sealing groove; 706-connection plate; 707-key groove; 708-baffle; 709-second sealing groove; 710-first engagement surface; 8-inner-outer sleeve sealing ring; 9-optical cable sealing ring; 10-protective tail sleeve; 1001-third sealing groove; 1002-sealing groove of tail sleeve; 1003-boss; 1004-opening of tail sleeve; 1005-annular rib; 1006-first abutment step; 11-sealing member of tail sleeve; 12-outer protective sleeve; 1201-annular groove of connector; 1202-first sealing groove; 1203-annular boss; 1204-protruding line; 1205-passage groove of connector; 1206-first ramp face; 1207-embedding groove of connector; 13-elastic clamp of connector; 1301-clamping part of connector; 1302-driving part of connector; 1303-connection part of connector; 14-first sealing ring; 15-bend-resistant tail sleeve; 1501-annular insertion end; 1502-ring-shaped rib of tail sleeve; 1503-annular groove for a first connection piece; 1504-annular clamping groove of bend-resistant tail sleeve; 16-optical cable; 17-dust cap of connector; 18-protective cap of the connector; 1801-clamping groove of protective cap of the connector; 1802-annular groove for a second connection piece; 1803-perforated tail stem; 19-connection piece of connector; 20-outer coupler end; 2001-outer end flange plate; 2002-positioning hole; 2003-square positioning notch; 2004-annular positioning notch; 2005-sleeve mounting cavity; 2007-opening of cylindrical tube; 2008-snap; 2009-outer end step; 2010-outer end guide groove; 2011-clamping groove of coupler; 2012-chamfer; 21-inner coupler end; 2101-inner end flange plate; 2102-square positioning protrusion; 2103-annular positioning protrusion; 2104-inner end guide groove; 22-sleeve; 23-protective cap of the coupler; 2301-annular groove of protective cap of the coupler; 2302-fifth sealing groove; 2303-passage groove of protective cap of the coupler; 2304-second ramp face; 2305-annular groove for third connection piece; 2306-tail stem of protective cap of the coupler; 2307-embedding groove of protective cap of the coupler; 24-sealing ring of protective cap of the coupler; 25-elastic clamp of protective cap of the coupler; 2501-clamping part of protective cap of the coupler; 2502-driving part of protective cap of the coupler; 2503-connection part of protective cap of the coupler; 26-dust cap of coupler; 27-lock nut; 2701-compression protrusion; 28-stop nut; and 29-connection piece of coupler.

### DETAILED DESCRIPTION OF EMBODIMENTS

The technical solutions in the present invention will be described clearly and comprehensively hereunder in conjunction with embodiments. Apparently, the described embodiments are a part of the embodiments of the present invention, rather than all embodiments of the present invention. All other embodiments obtained by persons of ordinary skilled in the art based on the embodiments of the present invention without any creative effort should fall into the protection scope of the present invention.

An optical cable 16 includes an optical fiber, a reinforcement member arranged around the optical fiber, and a cable outer sheath that wraps the optical fiber and the reinforcement member.

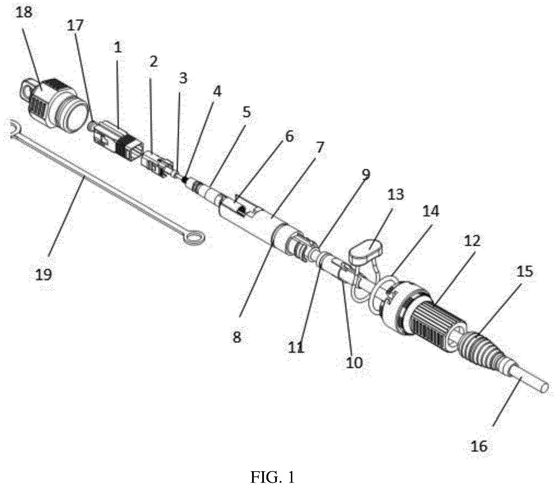

As shown in FIG. 1-FIG. 2 and FIG. 7-FIG. 18, a prefabricated connector provided in this embodiment is adaptable to be docked with a coupler, and includes a connector housing assembly and a ferrule assembly, where the connector housing assembly has a first end at which a ferrule assembly mounting cavity is formed and a second end at which an optical cable induction cavity in communication with the ferrule assembly mounting cavity is formed; and the ferrule assembly is arranged in the ferrule assembly mounting cavity and adaptable for inserted connection by the optical fiber of the optical cable 16 introduced from the optical cable induction cavity.

A mounting groove of the connector is provided on an inner wall at a first end of the connector housing assembly, and an elastic clamp of the connector 13 is further provided on the connector housing assembly; the elastic clamp of the connector 13 includes a driving part of the connector 1302 and a clamping part of the connector 1301, the driving part of the connector 1302 is located outside the connector housing assembly, the mounting groove of the connector is configured to engage with a clamping groove of the coupler 2011 on an outer wall thereof to form a locking groove, the clamping part of the connector 1301 is partially situated in the mounting groove of the connector and partially situated in the clamping groove of the coupler 2011 when the elastic clamp of the connector 13 is in a locked state; and the driving part of the connector 1302 is configured to drive the clamping part of the connector 1301 to be fully retracted into the mounting groove of the connector under an external force.

After the prefabricated connector and the coupler described above are inserted to each other in place, fast and convenient docking can be achieved when they are in a clamping connection through the elastic clamp of the connector 13; whereas when the connection needs to be released, the coupler can be smoothly pulled out of the prefabricated connector as long as the driving part of the connector 1302 is pressed in such a manner that the clamping part of the connector 1301 is fully retracted into the mounting groove of the connector, therefore, both the connection and the disassembly are very fast, convenient and smooth.

Further, the prefabricated connector also includes a protective cap of the connector 18 docked with the first end of the connector housing assembly. After the protective cap of the connector 18 is docked with the connector housing assembly, a closed housing that is dustproof and waterproof is formed, thereby protecting the ferrule assembly. When the prefabricated connector needs to be docked with the coupler, only the protective cap of the connector 18 needs to be removed.

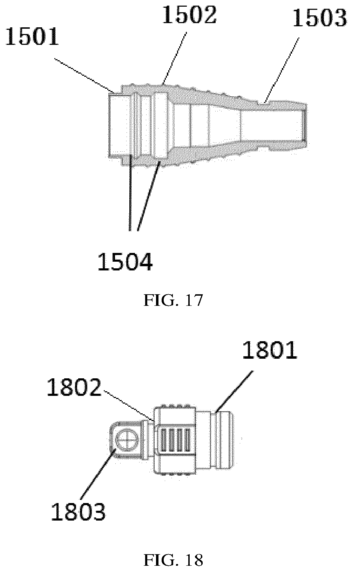

As shown in FIG. 18, a clamping groove of the protective cap of the connector 1801 is provided on an outer wall of the protective cap of the connector 18; when the protective cap of the connector 18 is inserted into the first end of the connector housing assembly, the clamping groove of the protective cap of the connector 1801 is aligned with the mounting groove of the connector to form a locking groove, and the clamping part of the connector 1301 is partially situated in the mounting groove of the connector and partially situated in the clamping groove of the protective cap of the connector 1801 to connect the protective cap of the connector 18 to the connector housing assembly.

Such a structural arrangement enables the elastic clamp of the connector 13 housing assembly of the connector to be docked with both the coupler and the protective cap of the connector 18, and thus the structure is more simplified.

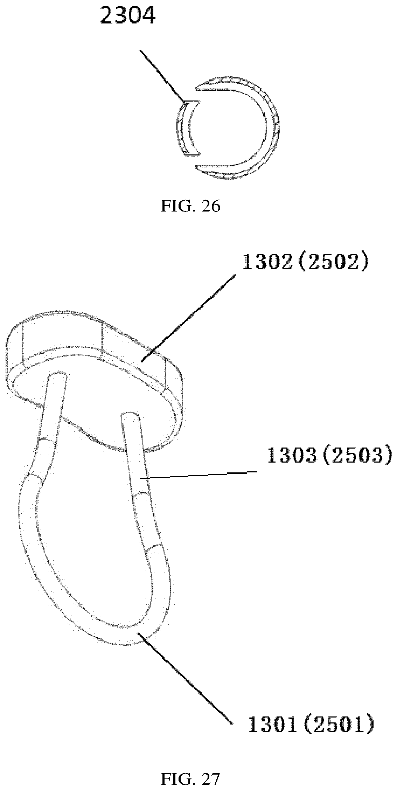

Specifically, as shown in FIG. 27, the clamping part of the connector 1301 is ring-shaped with an opening, the elastic clamp of the connector 13 further includes two connection parts 1303 of the connector which are respectively provided on both sides of the opening, and the connection part of the connector 1303 has one end connected to the driving part of the connector 1302 and the other end connected to a position of the clamping part of the connector 1301 closing to the opening.

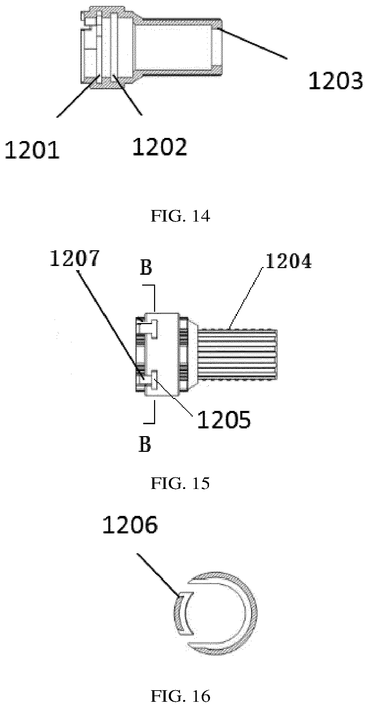

As shown in FIG. 14 and FIG. 15, the corresponding mounting groove of the connector includes:
an annular groove of the connector 1201 formed on the inner wall of the connector housing assembly, where the annular groove of the connector 1201 engages with the clamping groove of the coupler 2011 or the clamping groove of the protective cap of the connector 1801 to form a locking groove;
a passage groove of the connector 1205, where two passage grooves 1205 of the connector which are spaced apart along a circumferential direction of the annular groove of the connector 1201, and the passage groove of the connector 1205 is in communication with the annular groove of the connector 1201 to adapt the connection part of the connector 1303 to pass out from the passage groove of the connector 1205; and
an embedding groove of the connector 1207 extending from an end surface of a docking end of the connector housing assembly to the passage groove of the connector 1205 to adapt the connection part of the connector 1303 to access into the passage groove of the connector 1205 via the embedding groove of the connector 1207.

The engagement structure between the mounting groove of the connector and the elastic clamp of the connector 13 not only facilitates the installation of the elastic clamp of the connector 13, but also is very convenient in use. The removal of the protective cap of the connector 18 from the connector housing assembly is achieved as long as the driving part of the connector 1302 is pressed in such a manner that the clamping part of the connector 1301 expands radially to be fully retracted into the annular groove of the connector 1201. Preferably, the side surface of the passage groove of the connector 1205 abutting against the connection part of the connector 1303 forms a first ramp face 1206.

Before the prefabricated connector is docked with the coupler, the protective cap of the connector 18 is removed from the connector housing assembly firstly.

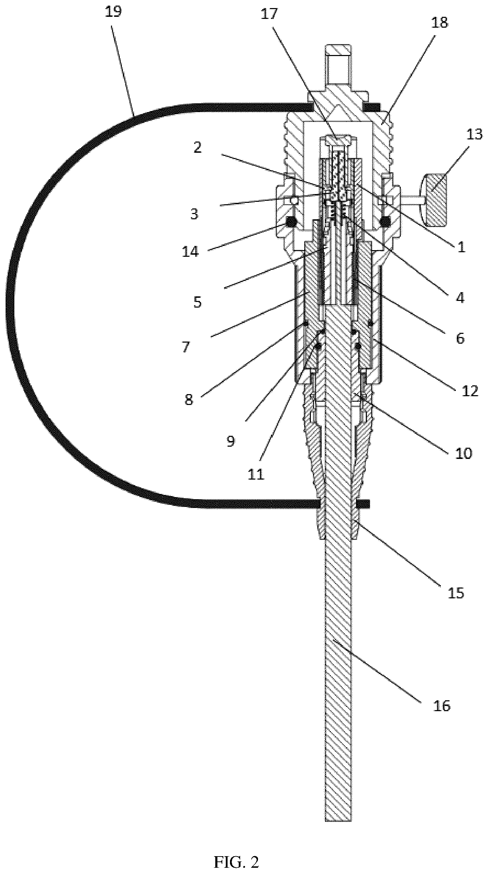

As shown in FIG. 1 and FIG. 2, the ferrule assembly includes a ferrule 3, a guide assembly, a tail stem 5, an elastic member 4 and a crimping sleeve 6, where a ferrule mounting cavity for mounting the ferrule 3 is formed on the guide assembly; the tail stem 5 has a through cavity, a first end of the tail stem 5 is adaptable to be connected to the guide assembly, and an opening slot 502 in communication with the through cavity is formed on a side wall at the second end of the tail stem 5; the elastic member is arranged between the ferrule and the tail stem 5, an elastic force of the elastic member is used to press against the ferrule 3, and the elastic member 4 is preferably a spring; and the crimping sleeve 6 is sleeved outside the tail stem 5, a reinforcement member of the optical cable is adaptable to enter between the crimping sleeve 6 and the tail stem 5 upon passing through the opening slot 502, and the reinforcement member is crimped between the crimping sleeve 6 and the tail stem 5 under a crimping force.

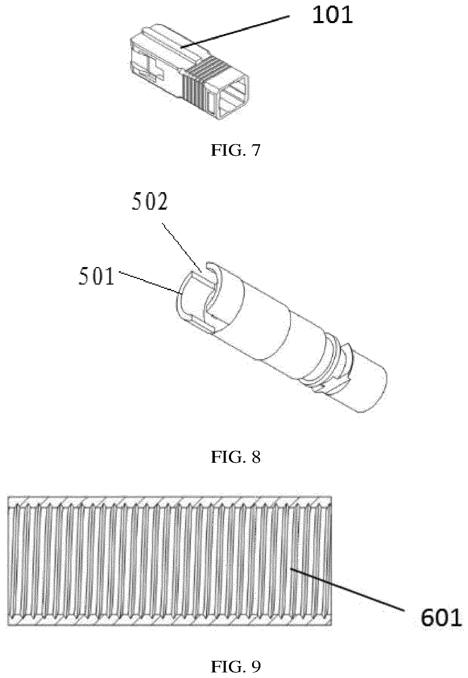

Two opening slots 502 symmetrically provided on the tail stem 5, and the two opening slots 502 are formed by two arc-shaped bosses 501 at intervals. The crimping sleeve 6 is preferably an aluminum crimping sleeve. As shown in FIG. 9, a thread 601 is preferably formed on an inner wall of the aluminum crimping sleeve. When two reinforcement members of the optical cable separately passes through the two opening slots 502 of the tail stem 5 and enters between the crimping sleeve 6 and the tail stem 5 to be crimped, the arrangement of the thread 601 can enhance post-crimping friction and enhance tensile strength.

Specifically, as shown in FIG. 1 and FIG. 2, the guide assembly includes a guide member 1 and an inner casing of the guide member 2. A ferrule mounting cavity is formed on the inner casing of the guide member 2, and the inner casing of the guide member 2 is connected to the guide member 1.

Further, the prefabricated connector further includes a dust cap of the connector 17 which is inserted into the ferrule assembly and configured to protect the ferrule 3 from dust.

The connector housing assembly includes an inner casing assembly of the connector and an outer casing assembly of the connector, where the ferrule assembly mounting cavity and the optical cable induction cavity are formed in the inner casing assembly of the connector; and the outer casing assembly of the connector is arranged outside the inner casing assembly of the connector, and the mounting groove of the connector is arranged on an inner wall at a first end of the outer casing assembly of the connector.

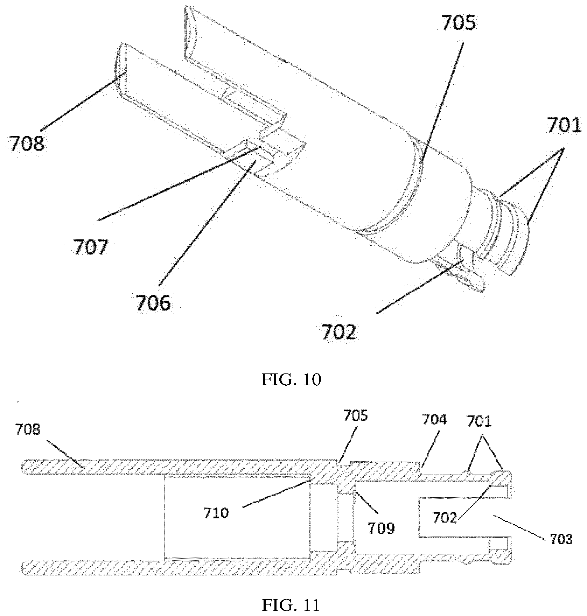

Further, as shown in FIG. 10-FIG. 13, the inner casing assembly of the connector includes an inner protective sleeve 7 and a protective tail sleeve 10. The inner protective sleeve 7 has a first end at which the ferrule assembly mounting cavity is formed. The ferrule assembly is mounted in the ferrule assembly mounting cavity, and two oppositely arranged baffles 708 are included at the first end of the inner protective sleeve 7. The two baffles 708 are adaptable to be inserted into two positioning holes 2002 of the coupler when the prefabricated connector is docked with the coupler; and the protective tail sleeve 10 has a cavity adaptable for the optical cable 16 to pass through, where a first end of the protective tail sleeve 10 is connected to a second end of the inner protective sleeve 7, and a sealing member is provided between the inner protective sleeve 7 and the protective tail sleeve 10.

The arrangement of the baffles 708 on the inner protective sleeve 7 enables them to be inserted into the positioning holes 2002 of the coupler during docking with the coupler, thereby enhancing the stability of the connection between the prefabricated connector and the coupler.

As shown in FIG. 11, a first engagement surface 710 is at the bottom of the ferrule assembly mounting cavity, and is adaptable to abut against the arc-shaped bosses 501 on the tail stem 5 to form a limit fixation for the tail stem 5; as shown in FIG. 7, a guide key 101 is provided on a guide member 1, as shown in FIG. 10, a connection plate 706 is arranged between the two baffles 708, and the connection plate 706 is slotted with a key groove 707 adaptable for insertion of the guide key 101. The arrangement of the engagement between the guide key 101 and the key groove 707 enables to allow for the connection and positioning between the ferrule assembly and the inner protective sleeve 7, and preventing a rotation.

A second sealing groove 709 is formed at a bottom of an insertion cavity which is located at the second end of the inner protective sleeve 7 and which is used for insertion of the protective tail sleeve 10. At a mouth of the first end of the protective tail sleeve 10, there is provided with a sealing groove of the tail sleeve 1002. A third sealing groove 1001 is provided on the outer wall at the first end of the protective tail sleeve 10. The sealing member includes an optical cable sealing ring 9 arranged in a sealing cavity formed by engagement between the sealing groove of the tail sleeve 1002 and the second sealing groove 709, and includes a sealing member of the tail sleeve 11 arranged between the third sealing groove 1001 and the inner wall of the inner protective sleeve 7. The arrangement of double sealing members may effectively play a role of waterproof and dustproof, and prevent water and dust from entering the mounting cavity of the ferrule assembly.

An annular clamping part 702 is formed on the inner wall at a mouth of the second end of the inner protective sleeve 7; a first abutment step 1006 is formed on the side wall at the first end of the protective tail sleeve 10; the protective tail sleeve 10, after being inserted at its first end into the inner protective sleeve, abuts against the annular clamping part 702 through the first abutment step 1006 to achieve a clamping connection with the inner protective sleeve 7; and the clamping fixation is more convenient and quicker than threaded fixation and heat shrinkage.

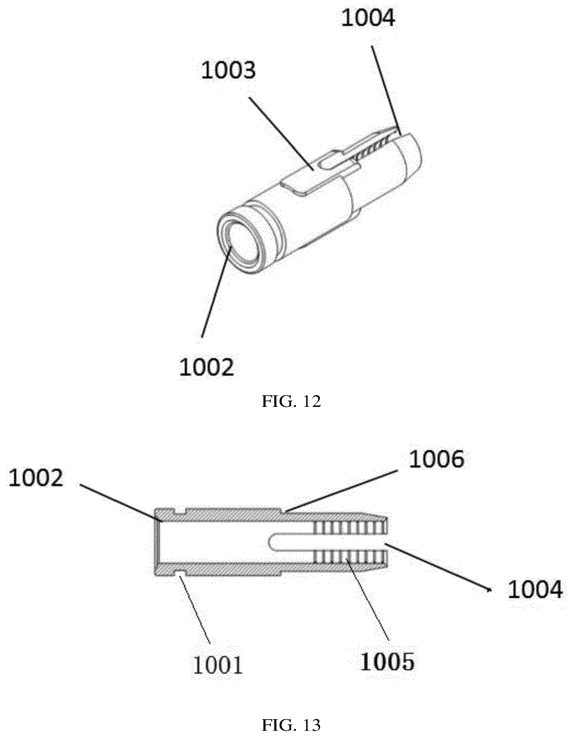

Further, as shown in FIG. 11 and FIG. 12, a boss catching groove 703 is formed at the second end of the inner protective sleeve 7, a boss 1003 is formed on the protective tail sleeve 10, and the boss 1003 is adaptable to be caught into the boss catching groove 703 when the first end of the protective tail sleeve 10 is inserted into the second end of the inner protective sleeve 7. The coupling between the boss catching groove 703 and the boss 1003 enables to position the inner protective sleeve 7 and the protective tail sleeve 10 so as to prevent occurrence of a rotation, thereby ensuring a precise positioning of the prefabricated connector.

At the second end of the protective tail sleeve 10, two openings of the tail sleeve1004 that are opposite to each other are provided, and an annular rib 1005 is further provided on the inner wall at the second end of the protective tail sleeve 10. When the optical cable is inducted from the second end of the protective tail sleeve 10, the optical cable can be clamped by the second end provided with the openings of the tail sleeve 1004, and the annular rib 1005 can enhance the fixing force with the optical cable.

As shown in FIG. 2, the outer casing assembly of the connector includes an outer protective sleeve 12 and a bend-resistant tail sleeve 15. The mounting groove of the connector and the elastic clamp of the connector 13 are arranged at the first end of the outer protective sleeve 12. A first sealing ring 14 is provided between docking ends of the protective cap of the connector 18 and the connector housing assembly. Preferably, a first sealing groove 1202 is arranged on the inner wall of the outer protective sleeve 12, and a first sealing ring 14 is arranged in the first sealing groove 1202. Definitely, as an alternative implementation, the first sealing groove 1202 may also be arranged on the protective cap of the connector 18.

As shown in FIG. 14, an annular boss 1203 is formed on the inner wall at the second end of the outer protective sleeve 12. As shown in FIG. 17, an annular insertion end 1501 is formed at the first end of the bend-resistant tail sleeve 15, and the annular insertion end 1501 is adaptable to be inserted into the annular boss 1203. As shown in FIG. 11, an annular clamping platform 701 and a second abutment step 704 are successively formed on the outer wall at the second end of the inner protective sleeve 7. As shown in FIG. 17, an annular clamping groove of the bend-resistant tail sleeve 1504 is provided on the inner wall at the first end of the bend-resistant tail sleeve 15, the inner protective sleeve 7 is mounted in the outer protective sleeve 12, and the second end of the inner protective sleeve 7 is adaptable to pass out from the second end of the outer protective sleeve 12 and be inserted into the bend-resistant tail sleeve 15, and abut against the annular boss 1203 through the second abutment step 704. Moreover, the annular clamping platform 701 is caught into the annular clamping groove of the bend-resistant tail sleeve 1504 to achieve the connection with the bend-resistant tail sleeve 15. The second end of the protective tail sleeve 10 is adapted to be inserted into the bend-resistant tail sleeve 15. Protruding ridges 1204 are further provided on the outer side wall of the outer protective sleeve 12 to increase hand feelings during operation.

Further, a sealing structure is further provided between the outer wall of the inner protective sleeve 7 and the inner wall of the outer protective sleeve 12. The sealing structure preferably includes a fourth sealing groove 705 arranged on the inner protective sleeve 7 and an inner-outer sleeve sealing ring 8 arranged in the fourth sealing groove 705.

An annular groove for a first connection piece 1503 is formed on the outer wall at the second end of the bend-resistant tail sleeve 15. An annular groove for a second connection piece 1802 is formed on the outer wall at the second end of the protective cap of the connector 18. A connection piece of the connector 19 has a first end arranged in the annular groove for the first connection piece 1503 and a second end arranged in the annular groove for the second connection piece 1802 to connect the protective cap of the connector 18 to the bend-resistant tail sleeve 15. On the protective cap of the connector 18, there is provided with a perforated tail stem 1803; and on the outer wall of the bend-resistant tail sleeve 15, there is provided with a ring-shaped rib of the tail sleeve 1502.

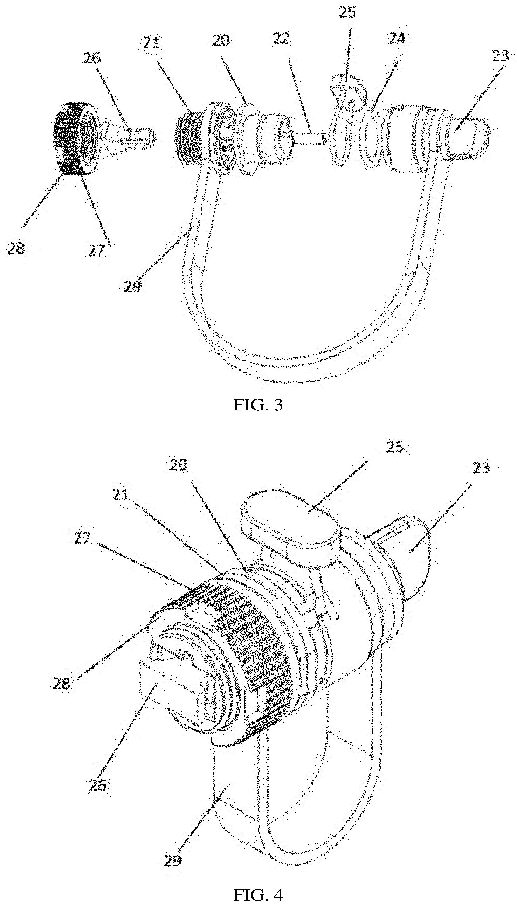

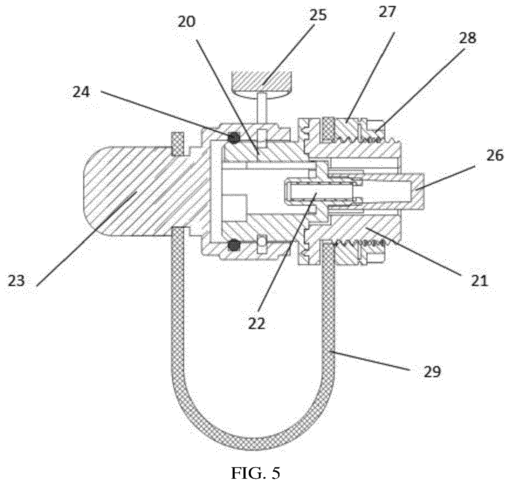

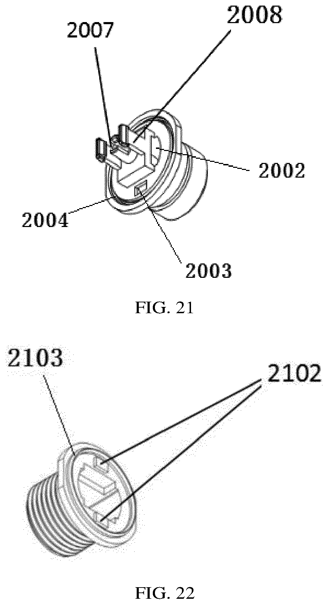

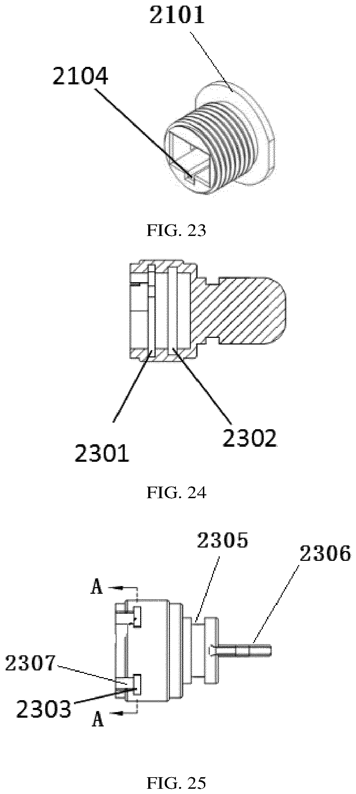

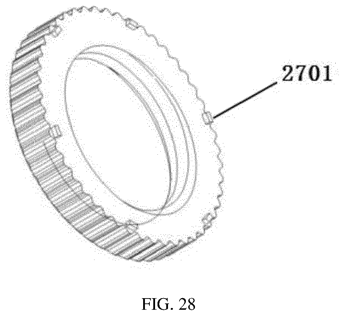

As shown in FIG. 3-FIG. 5 and FIG. 19-FIG. 28, a coupler provided in this embodiment is adaptable to be docked with the prefabricated connector described above, and includes a coupler body and a sleeve, where the coupler body is provided with a sleeve mounting cavity 2005 therein; and the sleeve 22 is mounted in the sleeve mounting cavity 2005, and is adaptable for insertion of the ferrule of the ferrule assembly when the coupler is docked with the prefabricated connector; and
a clamping groove of the coupler 2011 is provided on an outer wall at a first end of the coupler body, and the clamping groove of the coupler 2011 is configured to engage with the mounting groove of the connector to form a locking groove.

After the prefabricated connector and the coupler are inserted to each other in place, the clamping groove of the coupler 2011 is aligned with the mounting groove of the connector, and the clamping part of the connector 1301 is partially situated in the mounting groove of the connector and partially situated in the clamping groove of the coupler 2011 to connect the coupler to the prefabricated connector.

Further included is a protective cap of the coupler 23, where a mounting groove of the protective cap of the coupler is provided on the protective cap of the coupler 23, and an elastic clamp of the protective cap of the coupler is provided on the protective cap of the coupler 23; a driving part of the protective cap of the coupler is located outside the protective cap of the coupler 23, the mounting groove of the protective cap of the coupler is configured to engage with the clamping groove of the coupler 2011 to form a locking groove, a clamping part of the protective cap of the coupler is partially situated in the mounting groove of the protective cap of the coupler and partially situated in the clamping groove of the coupler 2011 when the elastic clamp of the protective cap of the coupler is in a locked state; and the driving part of the protective cap of the coupler is configured to drive the clamping part of the protective cap of the coupler to be fully retracted into the mounting groove of the protective cap of the coupler under an external force;

Such a structural arrangement enables the clamping groove of the coupler 2011 on the coupler to be docked with both the elastic clamp of the protective cap of the coupler 25 on the protective cap of the coupler 23 and the elastic clamp of the connector 13 on the prefabricated connector, and thus the structure is more simplified. After the protective cap of the coupler 23 is docked with the coupler body, a closed housing that is dustproof and waterproof can be formed. When the couple needs to be docked with the prefabricated connector, only the protective cap of the coupler 23 needs to be removed. Preferably, the side surface of the passage groove of the protective cap of the coupler 2303 abutting against the connection part of the protective cap of the coupler 2503 forms a second ramp face 2304.

Preferably, the clamping part of the protective cap of the coupler 2501 is ring-shaped with an opening, the elastic clamp of the protective cap of the coupler 25 further includes two connection parts 2503 of the protective cap of the coupler which are respectively provided on both sides of the opening, and the connection part of the protective cap of the coupler 2503 has one end connected to the driving part of the protective cap of the coupler 2502 and the other end connected to a position of the clamping part of the protective cap of the coupler 2501 closing to the opening;
the mounting groove of the protective cap of the coupler includes:
an annular groove of the protective cap of the coupler 2301 formed on the inner wall of the protective cap of the coupler, where the annular groove of the protective cap of the coupler 2301 engages with the clamping groove of the coupler 2011 to form a locking groove;
a passage groove of the protective cap of the coupler 2303, where two passage grooves of the protective cap of the coupler which are spaced apart along a circumferential direction of the annular groove of the protective cap of the coupler 2301, and the passage groove of the protective cap of the coupler 2303 is in communication with the annular groove of the protective cap of the coupler 2301 to adapt the connection part of the protective cap of the coupler 2503 to pass out from the passage groove of the protective cap of the coupler 2303; and
an embedding groove of the protective cap of the coupler 2307 extending from an end surface of a docking end of the protective cap of the coupler to the passage groove of the protective cap of the coupler 2303 to adapt the connection part of the protective cap of the coupler 2503 to access into the passage groove of the protective cap of the coupler 2303 via the embedding groove of the protective cap of the coupler 2307.

After the protective cap of the coupler 23 and the coupler described above are inserted to each other in place, fast and convenient docking can be achieved when they are in a clamping connection through the elastic clamp of the protective cap of the coupler 25; whereas when the connection needs to be released, the coupler can be smoothly pulled out of the protective cap of the coupler 23 as long as the driving part of the protective cap of the coupler 2502 is pressed in such a manner that the clamping part of the protective cap of the coupler 2501 is fully retracted into the mounting groove the protective cap of the coupler, therefore, both the connection and the disassembly are very fast and convenient.

The coupler body includes an outer coupler end 20 and an inner coupler end 21. Where the outer coupler end 20 includes a main body thereof having an outer end through cavity, and a sleeve mounting cavity 2005 arranged at a first end of the main body of the outer coupler end, where the main body of the outer coupler end is adaptable to be docked with the prefabricated connector or the protective cap of the coupler 23, and the sleeve mounting cavity 2005 has one end extending into the outer end through cavity and the other end extending out of the outer end through cavity;
the inner coupler end 21 having an inner end through cavity thereon, where the inner end through cavity is adaptable for the sleeve mounting cavity 2005 to insert into the inner end through cavity when a first end of the inner coupler end 21 is connected to the first end of the outer coupler end 20, and a second end of the inner coupler end 21 is a male thread end; and
a lock nut 27 threadedly connected to the second end of the inner coupler end 21.

Preferably, the outer coupler end 20 and the inner coupler end 21 are connected by means of welding, and the coupler body is formed in such a manner that the separately formed outer coupler end 20 and inner coupler end 21 are docked with each, and thus the manufacturing process of the coupler body is simpler.

In order to prevent the retained lock nut 27 from loosening, further included is a stop nut 28 arranged on the second end of the inner coupler end 21, where a compression protrusion 2701 is provided on a side surface of the lock nut 27 facing the stop nut 28. Several, e.g., four, compression protrusions 2701 are evenly provided. During usage, firstly, the lock nut 27 is used to retain the coupler on a device, and then the stop nut 28 is tightened. During the tightening process, the compression protrusions 2701 are compressed and deformed. A pre-tightening force is formed between the lock nut 27 and the stop nut 28, which can effectively prevent loosening in the retaining and ensure stability of the retaining.

A sealing member is arranged between the outer coupler end 20 and the protective cap of the coupler 23, which can seal the connection between the outer coupler end 20 and the protective cap of the coupler 23, thereby playing a role of waterproof and dustproof. Preferably, a fifth sealing groove 2302 is provided on the protective cap of the coupler 23, and the sealing member is a sealing ring of the protective cap of the coupler24 arranged in the fifth sealing groove 2302.

An annular groove for the third connection piece 2305 is further provided on the outer wall of the protective cap of the coupler 23. The connection piece of the coupler 29 has a first end and a second end, where the first end is arranged in the annular groove for the third connection piece 2305 and the second end is arranged between an inner end flange plate 2101 and the lock nut 27. The arrangement of the connection piece of the coupler 29 enables the protective cap of the coupler 23 to be connected to the coupler body, and meanwhile the second end of the connection piece of the coupler 29 can also form a primary seal. The protective cap of the coupler 23 has a tail stem of the protective cap of the coupler 2306.

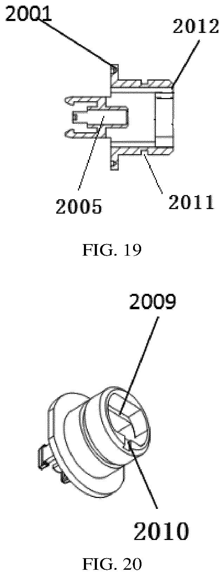

Further, as shown in FIG. 19-FIG. 23, an outer end flange plate 2001 is arranged at the first end of the main body of the outer coupler end, the sleeve mounting cavity 2005 is retained on the outer end flange plate 2001, two positioning holes 2002 surrounding the sleeve mounting cavity 2005 are provided on the outer end flange plate 2001, and the positioning holes 2002 are adaptable for insertion of the baffles 708 on the inner protective sleeve 7 of the prefabricated connector; and
an inner end flange plate 2101 is arranged at the first end of the inner coupler end 21, and the outer end flange plate 2001 is docked with the inner end flange plate 2101 to connect the inner coupler end 21 to the outer coupler end 20 together.

The outer end flange plate 2001 and the inner end flange plate 2101 are both waist-shaped flange plates. Preferably, the two positioning holes 2002 are semicircular holes and are arranged symmetrically with respect to the center of the outer end flange plate 2001.

The outer end flange plate 2001 and the inner end flange plate 2101 are connected by means of welding, and their contact surfaces are provided with positioning structures which not only enable positioning of them during welding, but also enhance their connection strength. There can be multiple positioning structures in implementation. In this embodiment, they preferably include an annular positioning notch 2004 and square positioning notches 2003 that are formed on a surface of the outer end flange plate 2001, and include an annular positioning protrusion 2103 and square positioning protrusions 2102 that are formed on a surface of the inner end flange plate 2101. The positioning between the outer end flange plate 2001 and the inner end flange plate 2101 is achieved by insert the annular positioning protrusion 2103 into the annular positioning notch 2004 and inserting the square positioning protrusions 2102 into the square positioning notches 2003. Definitely, as an alternative implementation, the annular positioning notch 2004 and the square positioning notches 2003 may be arranged on the inner end flange plate 2101, while the annular positioning protrusion 2103 and the square positioning protrusions 2102 may be arranged on the outer end flange plate 2001. In a specific arrangement, two square positioning notches 2003 are oppositely arranged around a center of the outer end flange plate 2001, and are located within the annular positioning notch 2004, moreover, the annular positioning notch 2004 and the outer end flange plate 2001 are arranged concentrically. Also, for the annular positioning protrusion 2103 and the square positioning protrusions 2102, they are arranged accordingly with the annular positioning notch 2004 and the square positioning notches 2003; and details will be omitted.

A retainer is provided on an end face of a first end of the outer end flange plate 2001, and a hollow cylindrical tube is retained on the outer end flange plate 2001 through the retainer. Moreover, the cylindrical tube has a first end located inside the outer end flange plate 2001 and a second end located outside the outer end flange plate 2001. The sleeve mounting cavity 2005 is formed by the inner cavity of the cylindrical tube. An opening of the cylindrical tube 2007 is provided at the second end of the cylindrical tube, and two openings 2007 of the cylindrical tube are arranged oppositely. In addition, a limiting emboss is further provided on the inner wall at the second end of the cylindrical tube. The limiting emboss can prevent the sleeve 22 from escaping from the second end of the cylindrical tube after insertion. The retainer is further provided with two opposite snaps 2008 which are arranged around the cylindrical tube and configured to be in clamping connection with the dust cap of the coupler 26.

The clamping groove of the coupler 2011 is specifically provided on the outer end flange plate 2001. The inner cavity at the second end of the main body of the outer coupler end is adaptable for insertion of the ferrule assembly. Moreover, an outer end guide groove 2010 is formed on the inner cavity of the main body of the outer coupler end, and an inner end guide groove 2104 is further formed on the inner cavity of the inner coupler end 21. After the inner coupler end 21 is welded to the outer coupler end 20, the outer end guide groove 2010 is aligned with the inner end guide groove 2104 and is adaptable for insertion of the guide key 101 of the guide member 1, so as to guide insertion between the coupler and the prefabricated connector. In addition, an outer end step 2009 is further formed at the mouth of the inner cavity of the main body of the outer coupler end, and the outer end step 2009 is adaptable to abut against the inner protective sleeve 7. A chamfer 2012 is provided on the outer wall at the second end part of the main body of the outer coupler end.

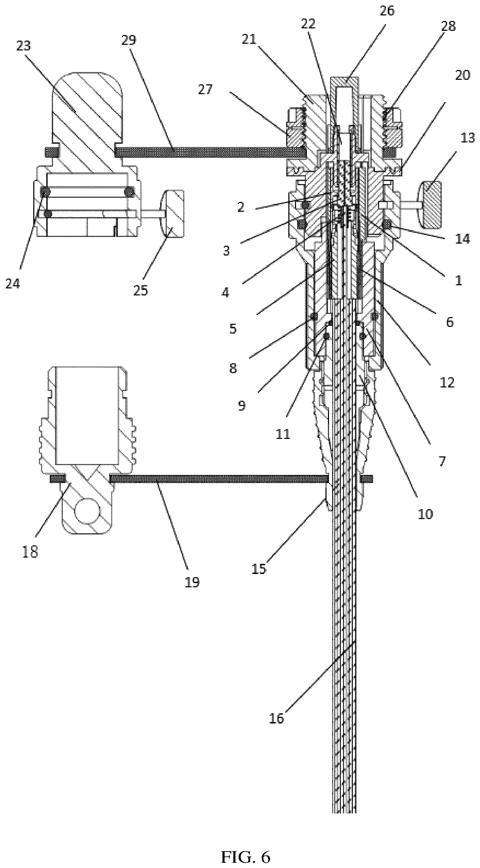

As shown in FIG. 6, a prefabricated connector assembly provided in this embodiment includes the above-mentioned prefabricated connector and the above-mentioned coupler.

In respect of the prefabricated connector, the coupler and the prefabricated connector assembly described above, as an alternative implementation, the elastic clamp, the mounting groove and the clamping groove may also be arranged on the prefabricated connector in a swapping way with respect to those on the coupler, in particular:
for the prefabricated connector, a clamping groove of the connector is provided on an outer wall at the first end of the connector housing assembly, and the clamping groove of the connector is configured to engage with a mounting groove of the coupler on an inner wall of the coupler to form a locking groove.

For the coupler, a mounting groove of the coupler is provided on an inner wall at the first end of the coupler body, and an elastic clamp of the coupler is further provided on the coupler body. The elastic clamp of the coupler includes a driving part of the coupler and a clamping part of the coupler, the driving part of the coupler is located outside the coupler body, the mounting groove of the coupler is configured to engage with a clamping groove of the connector to form a locking groove. The clamping part of the coupler is partially situated in the mounting groove of the coupler and partially situated in the clamping groove of the connector when the elastic clamp of the coupler is in a locked state. The driving part of the coupler is configured to drive the clamping part of the coupler to be fully retracted into the mounting groove of the coupler under an external force. After the couple rand the prefabricated connector are inserted to each other in place, the clamping groove of the connector is aligned with the mounting groove of the coupler, and the clamping part of the coupler is partially situated in the mounting groove of the coupler and partially situated in the clamping groove of the connector to connect the coupler to the prefabricated connector.

In particular, the clamping part of the coupler is ring-shaped with an opening, the elastic clamp of the coupler further includes two connection parts of the coupler which are respectively provided on both sides of the opening, and the connection part of the coupler has one end connected to the driving part of the coupler and the other end connected to a position of the clamping part of the coupler closing to the opening;
the mounting groove of the coupler includes:
an annular groove of the coupler formed on the inner wall of the coupler, where the annular groove of the coupler and the clamping groove of the connector or the clamping groove of the protective cap of the coupler form a locking groove;
a passage groove of the coupler, where two passage grooves of the coupler are spaced apart along a circumferential direction of the annular groove of the coupler, and the passage groove of the coupler is in communication with the annular groove of the coupler to adapt the connection part of the coupler to pass out from the passage groove of the coupler; and
an embedding groove of the coupler extending from an end surface of a docking end of the coupler body to the passage groove of the coupler to adapt the connection part of the coupler to access into the passage groove of the coupler via the embedding groove of the coupler.

Accordingly, the structures of the protective cap of the connector 18 and the protective cap of the coupler 23 may also be adaptably adjusted, in particular:
for the protective cap of the connector 18, a mounting groove of the protective cap of the connector is provided on an inner wall of the protective cap of the connector 18, and an elastic clamp of the protective cap of the connector is further provided on the protective cap of the connector 18. The elastic clamp of the protective cap of the connector includes a driving part of the protective cap of the connector and a clamping part of the protective cap of the connector, the driving part of the protective cap of the connector is located outside the protective cap of the connector 18, and the mounting groove of the protective cap of the connector is configured to engage with the clamping groove of the connector to form a locking groove. The clamping part of the protective cap of the connector is partially situated in the mounting groove of the protective cap of the connector and partially situated in the clamping groove of the connector when the elastic clamp of the protective cap of the connector is in a locked state. The driving part of the protective cap of the connector is configured to drive the clamping part of the protective cap of the connector to be fully retracted into the mounting groove of the protective cap of the connector under an external force. When the connector housing assembly is inserted into the protective cap of the connector 18, the mounting groove of the protective cap of the connector is aligned with the clamping groove of the connector, and the clamping part of the protective cap of the connector is partially situated in the mounting groove of the protective cap of the connector and partially situated in the clamping groove of the connector to achieve the connection between the protective cap of the connector 18 and the connector housing assembly.

In particular, the clamping part of the protective cap of the connector is ring-shaped with an opening, the elastic clamp of the protective cap of the connector further includes two connection parts of the protective cap of the connector which are respectively provided on both sides of the opening, and the connection part of the protective cap of the connector has one end connected to the driving part of the protective cap of the connector and the other end connected to a position of the clamping part of the protective cap of the connector closing to the opening;
the mounting groove of the protective cap of the connector includes:
an annular groove of the protective cap of the connector formed on the inner wall of the protective cap of the connector 18, where the annular groove of the protective cap of the connector engages with the clamping groove of the connector to form a locking groove;
a passage groove of the protective cap of the connector, where two passage grooves of the protective cap of the connector are spaced apart along a circumferential direction of the annular groove of the protective cap of the connector, and the passage groove of the protective cap of the connector is in communication with the annular groove of the protective cap of the connector to adapt the connection part of the protective cap of the connector to pass out from the passage groove of the protective cap of the connector; and
an embedding groove of the protective cap of the connector extending from an end surface of a docking end of the protective cap of the connector 18 to the passage groove of the protective cap of the connector to adapt the connection part of the protective cap of the connector to access into the passage groove of the protective cap of the connector via the embedding groove of the protective cap of the connector.

For the protective cap of the coupler 23, a clamping groove of the protective cap of the coupler is provided on an outer wall of the protective cap of the coupler 23, and is configured to engage with the mounting groove of the coupler to form a locking groove. When the protective cap of the coupler 23 is inserted into the first end of the coupler body, the clamping groove of the protective cap of the coupler is aligned with the mounting groove of the coupler, and the clamping part of the coupler is partially situated in the mounting groove of the coupler and partially embedded in the clamping groove of the protective cap of the coupler to achieve the connection between the protective cap of the coupler 23 and the coupler boy.

### Operation principle:

a device matched with an assembly has a hole depending on the size of the coupler and is arranged with an anti-rotation apparatus. The coupler passes through the hole of the device after being mounted with the connection piece of the coupler 29, and is fastened with the lock nut 27 and the stop nut 28. The connector inside the device is connected to the coupler. The guide key on the guide member 1 of the prefabricated connector is aligned with the marker of the key groove on the coupler for connecting with the coupler. The outer protective sleeve 12 is fixed to the coupler by in-line clamping. For an opened state, the driving part of the connector 1302 for the elastic clamp of the connector 13 is pressed in such a manner that the clamping part of the connector is opened and fully retracted into the mounting groove of the connector of the outer protective sleeve, and meanwhile the connector is disengaged from the coupler by pulling backwards.

### Routing:

the processing technology of the coupler: the outer end flange plate 2001 at the outer coupler end 20 and the inner end flange plate 2101 at the inner coupler end 21 are ultrasonically welded. During welding, please note that the inner end guide groove 2104 at the inner coupler end 21 must be in line with the outer end guide groove 2010 at the outer coupler end 20. The square positioning protrusions 2102 and the annular positioning protrusion 2103 on the inner coupler end 21 are respectively matched with the square positioning notches and the annular positioning notch 2004 on the outer coupler end 20 to increase the welding strength; a crimping tool is used to crimp the sleeve 22 from the end part of the sleeve mounting cavity 2005 on the outer coupler end 20; and the manufacture of the coupler is completed upon installation of the protective cap of the coupler 23, the dust cap of the coupler 26, the connection piece of the coupler 29, the lock nut 27, and the stop nut 28.

The processing technology of the refabricated connector: the first sealing ring 14 and the elastic clamp of the connector 13 are firstly mounted into the outer protective sleeve 12; then the optical cable 16 is passed through the connection piece of the connector 19, the bend-resistant tail sleeve 15, the protective tail sleeve 10, the seal member 11 of the tail sleeve, the optic cable sealing ring 9, the outer protective sleeve 12, and the inner protective sleeve 7; the seal member 11 of the tail sleeve is moved into the third sealing groove 1001 of the protective tail sleeve 10; the inner-outer sleeve sealing ring 8 is passed into the fourth sealing groove 705 of the inner protective sleeve 7; then the cable outer sheath of the optical cable 16 is stripped off, leaving a cable unit and the reinforcement member inside the optical cable 16; and the crimping sleeve 6, the tail stem 5 and the elastic member 4 are passed through the cable unit inside the optical cable 16.

Then the cable unit is stripped off according to processing templates. In stripping, the cable outer sheath of the inner cable unit is kept with a length of 20 mm, the reinforcement member is kept with a length of about 12mm, and the fiber is kept with a length of about 15mm. The length control ensures that the ferrule assembly would remain a natural state inside the inner protective sleeve 7 during operation, therefore, no additional loss will be caused; then glue is injected into the ferrule 3; then the optical fiber is passed through the ferrule 3, and then perform heating and curing; the ferrule 3 is mounted into the inner casing of the guide member 2, and then the tail stem 5 is pushed into the inner casing of the guide member 2, and the tail stem 5 and the inner casing of the guide member are fixed by clamping; then the reinforcement member passes between the tail stem 5 and the crimping sleeve 6 from the opening slot 502 of the tail stem 5, and a crimping is performed on the reinforcement member through a crimping machine, the optical cable and the prefabricated connector are retained to ensure that the prefabricated connector can withstand various external forces; and then the grinding and testing procedures are carried out to complete the manufacture of joints; and
then the inner protective sleeve 7 is pushed forward, and the ferrule assembly is mounted into the inner cavity of the inner protective sleeve 7, please note that the key groove 707 on the inner protective sleeve 7 should be matched with the guide key 101 on the guide member 1; then the optical cable sealing ring 9 and the protective tail sleeve 10 are pushed forward, the protective tail sleeve 10 is pressed into the inner protective sleeve 7; the first abutment step 1006 of the protective tail sleeve 10 and the annular clamping part 702 on the inner protective sleeve 7 are fixed by clamping; please note that the boss catching groove 703 on the inner protective sleeve 7 should be matched with the boss 1003 on the protective tail sleeve 10 so as to prevent a rotation; then the outer protective sleeve 12 is pushed forward; the annular boss 1203 on the outer protective sleeve 12 is pressed against the second abutment step 704 on the inner protective sleeve 7; then the bend-resistant tail sleeve 15 is pushed forward, and the annular clamping groove of the bend-resistant tail sleeve 1504 at the front end of the bend-resistant tail sleeve 15 is matched with the annular clamping platform 701 on the inner protective sleeve 7 to form a clamping fixation; the annular insertion end 1501 extends into the tail end of the outer protective sleeve 12; the protective cap of the connector 18 is mounted; the connection piece of the connector 19 has its one end nested into the annular groove for the first connection piece 1503 at the rear end of the bend-resistant tail sleeve 15, and the other end nested into the annular groove of the second connection piece 1802 of the protective cap of the connector 18 to connect the protective cap of the connector 18 to the outer protective sleeve 12.

When in use, fast connection is achieved as long as the protective cap of the coupler 23, the protective cap of the connector 18 and the dust cap of the connector 17 are removed, and then the prefabricated connector is mounted with the coupler retained on the device.

Finally, it should be noted that the foregoing embodiments are merely intended for describing the technical solutions of the present invention, rather than limiting the present invention. Although the present invention has been described in detail with reference to the foregoing embodiments, persons of ordinary skilled in the art should understand that they may still make modifications to the technical solutions described in the foregoing embodiments, or make equivalent replacements to some or all technical features therein. However, these modifications or replacements do not make the essence of corresponding technical solutions depart from the scope of the technical solutions in the embodiments of the present invention.

## Claims

1. A prefabricated connector adaptable to be docked with a coupler, comprising:
a connector housing assembly having a first end at which a ferrule assembly mounting cavity is formed and a second end at which an optical cable induction cavity in communication with the ferrule assembly mounting cavity is formed; and
a ferrule assembly arranged in the ferrule assembly mounting cavity and adaptable for inserted connection of an optical fiber of an optical cable (16) introduced from the optical cable induction cavity;
wherein a mounting groove of a connector is provided on an inner wall at a first end of the connector housing assembly, an elastic clamp of the connector (13) is further provided on the connector housing assembly, the elastic clamp of the connector (13) comprises a driving part of the connector (1302) and a clamping part of the connector (1301), the driving part of the connector (1302) is located outside the connector housing assembly, the mounting groove of the connector is configured to engage with a clamping groove of the coupler (2011) on an outer wall of the coupler to form a locking groove, and the clamping part of the connector (1301) is partially situated in the mounting groove of the connector and partially situated in the clamping groove of the coupler (2011) when the elastic clamp of the connector (13) is in a locked state; and the driving part of the connector (1302) is configured to drive the clamping part of the connector (1301) to be fully retracted into the mounting groove of the connector under an external force;
or
a clamping groove of the connector is provided on an outer wall at the first end of the connector housing assembly, and the clamping groove of the connector is configured to engage with a mounting groove of the coupler on an inner wall of the coupler to form a locking groove.

2. The prefabricated connector according to claim 1, further comprising: a protective cap (18) of the connector docked with the first end of the connector housing assembly;
wherein a clamping groove of the protective cap of the connector (1801) is provided on an outer wall of the protective cap of the connector (18), when the protective cap of the connector (18) is inserted into the first end of the connector housing assembly, the clamping groove of the protective cap of the connector (1801) is aligned with the mounting groove of the connector to form a locking groove, and the clamping part of the connector (1301) is partially situated in the mounting groove of the connector and partially situated in the clamping groove of the protective cap of the connector (1801) to connect the protective cap (18) of the connector to the connector housing assembly;
or
a mounting groove of the protective cap of the connector is provided on an inner wall of the protective cap of the connector (18), and an elastic clamp of the protective cap of the connector is further provided on the protective cap of the connector (18), the elastic clamp of the protective cap of the connector comprises a driving part of the protective cap of the connector and a clamping part of the protective cap of the connector, the driving part of the protective cap of the connector is located outside the protective cap of the connector (18), the mounting groove of the protective cap of the connector is configured to engage with the clamping groove of the connector to form a locking groove, the clamping part of the protective cap of the connector is partially situated in the mounting groove of the protective cap of the connector and partially situated in the clamping groove of the connector when the elastic clamp of the protective cap of the connector is in a locked state; and the driving part of the protective cap of the connector is configured to drive the clamping part of the protective cap of the connector to be fully retracted into the mounting groove of the protective cap of the connector under an external force.

3. The prefabricated connector according to claim 2, wherein the clamping part (1301) of the connector is ring-shaped with an opening, the elastic clamp of the connector (13) further comprises two connection parts of the connector (1303) which are respectively provided on both sides of the opening, and a connection part of the connector (1303) has one end connected to the driving part of the connector (1302) and the other end connected to a position of the clamping part of the connector (1301) closing to the opening;
the mounting groove of the connector comprises:
an annular groove of the connector (1201) formed on an inner wall of the connector housing assembly, wherein the annular groove of the connector (1201) engages with the clamping groove of the coupler (2011) or the clamping groove of the protective cap of the connector (1801) to form a locking groove;
a passage groove of the connector (1205), wherein two passage grooves of the connector (1205) are spaced apart along a circumferential direction of the annular groove of the connector (1201), and the passage groove of the connector (1205) is in communication with the annular groove of the connector (1201) to adapt the connection part of the connector (1303) to pass out from the passage groove of the connector (1205); and
an embedding groove of the connector (1207) extending from an end surface of a docking end of the connector housing assembly to the passage groove of the connector (1205) to adapt the connection part of the connector (1303) to access into the passage groove of the connector (1205) via the embedding groove of the connector (1207);
or
the clamping part of the protective cap of the connector is ring-shaped with an opening, the elastic clamp of the protective cap of the connector further comprises two connection parts of the protective cap of the connector which are respectively provided on both sides of the opening, and a connection part of the protective cap of the connector has one end connected to the driving part of the protective cap of the connector and the other end connected to a position of the clamping part of the protective cap of the connector closing to the opening;
the mounting groove of the protective cap of the connector comprises:
an annular groove of the protective cap of the connector formed on the inner wall of the protective cap of the connector (18), wherein the annular groove of the protective cap of the connector engages with the clamping groove of the connector to form a locking groove;
a passage groove of the protective cap of the connector, wherein two passage grooves of the protective cap of the connector are spaced apart along a circumferential direction of the annular groove of the protective cap of the connector, and the passage groove of the protective cap of the connector is in communication with the annular groove of the protective cap of the connector to adapt the connection part of the protective cap of the connector to pass out from the passage groove of the protective cap of the connector; and
an embedding groove of the protective cap of the connector extending from an end surface of a docking end of the protective cap of the connector (18) to the passage groove of the protective cap of the connector to adapt the connection part of the protective cap of the connector to access into the passage groove of the protective cap of the connector via the embedding groove of the protective cap of the connector.

4. The prefabricated connector according to claim 2 or 3, wherein a first sealing ring (14) is provided between docking ends of the protective cap of the connector (18) and the connector housing assembly.

5. The prefabricated connector according to any one of claims 1 to 3, wherein the connector housing assembly comprises:
an inner casing assembly of the connector in which the ferrule assembly mounting cavity and the optical cable induction cavity are formed; and
an outer casing assembly of the connector arranged outside the inner casing assembly of the connector, wherein the mounting groove of the connector is arranged on an inner wall at a first end of the outer casing assembly of the connector.

6. The prefabricated connector according to claim 5, wherein the inner casing assembly of the connector comprises:
an inner protective sleeve (7) having a first end at which the ferrule assembly mounting cavity is formed and two oppositely arranged baffles (708) are comprised, wherein the two baffles (708) are adaptable to be inserted into two positioning holes of the coupler (2002) when the prefabricated connector is docked with the coupler; and
a protective tail sleeve (10) having a cavity adaptable for the optical cable (16) to pass through, wherein a first end of the protective tail sleeve (10) is connected to a second end of the inner protective sleeve (7), and a sealing member is provided between the inner protective sleeve (7) and the protective tail sleeve (10).

7. The prefabricated connector according to claim 6, wherein a boss catching groove (703) is formed at the second end of the inner protective sleeve (7), a boss (1003) is formed on the protective tail sleeve (10), and the boss (1003) is adaptable to be caught into the boss catching groove (703) when the protective tail sleeve (10) is inserted into the second end of the inner protective sleeve (7).

8. The prefabricated connector according to claim 6, wherein a guide key (101) is provided on a guide assembly of the ferrule assembly, a connection plate (706) is arranged between the two baffles (708), and the connection plate (706) is slotted with a key groove (707) adaptable for insertion of the guide key (101).

9. The prefabricated connector according to any one of claims 1 to 3, wherein the ferrule assembly comprises:
a ferrule (3);
a guide assembly on which a ferrule mounting cavity for mounting the ferrule (3) is formed;
a tail stem (5) having a through cavity, wherein a first end of the tail stem (5) is adaptable to be connected to the guide assembly, and an opening slot (502) in communication with the through cavity is formed on a side wall at the second end of the tail stem (5);
an elastic member (4) arranged between the ferrule and the tail stem (5), wherein an elastic force of the elastic member (4) is used to press against the ferrule (3); and
a crimping sleeve (6) sleeved outside the tail stem (5), wherein a reinforcement member of the optical cable is adaptable to enter between the crimping sleeve (6) and the tail stem (5) upon passing through the opening slot (502), and the reinforcement member is crimped between the crimping sleeve (6) and the tail stem (5) under a crimping force.

10. A coupler adaptable to be docked with the prefabricated connector according to any one of claims 1 to 9, comprising:
a coupler body provided with a sleeve mounting cavity (2005) therein; and
a sleeve (22) mounted in the sleeve mounting cavity (2005) and adaptable for insertion of the ferrule of the ferrule assembly when the coupler is docked with the prefabricated connector;
wherein a clamping groove of the coupler (2011) is provided on an outer wall at a first end of the coupler body, and the clamping groove of the coupler (2011) is configured to engage with the mounting groove of the connector to form a locking groove;
or
a mounting groove of the coupler is provided on an inner wall at the first end of the coupler body, and an elastic clamp of the coupler is further provided on the coupler body; the elastic clamp of the coupler comprises a driving part of the coupler and a clamping part of the coupler, the driving part of the coupler is located outside the coupler body, the mounting groove of the coupler is configured to engage with a clamping groove of the connector to form a locking groove, the clamping part of the coupler is partially situated in the mounting groove of the coupler and partially situated in the clamping groove of the connector when the elastic clamp of the coupler is in a locked state; and the driving part of the coupler is configured to drive the clamping part of the coupler to be fully retracted into the mounting groove of the coupler under an external force.

11. The coupler according to claim 10, further comprising: a protective cap of the coupler (23), wherein a mounting groove of the protective cap of the coupler is provided on the protective cap of the coupler (23), and an elastic clamp of the protective cap of the coupler (25) is provided on the protective cap of the coupler (23); the elastic clamp of the protective cap of the coupler (25) comprises a driving part of the protective cap of the coupler (2502) and a clamping part of the protective cap of the coupler (2501), the driving part of the protective cap of the coupler (2502) is located outside the protective cap of the coupler (23), the mounting groove of the protective cap of the coupler is configured to engage with the clamping groove of the coupler (2011) to form a locking groove, the clamping part of the protective cap of the coupler (2501) is partially situated in the mounting groove of the protective cap of the coupler and partially situated in the clamping groove of the coupler (2011) when the elastic clamp of the protective cap of the coupler (25) is in a locked state; and the driving part of the protective cap of the coupler (2502) is configured to drive the clamping part of the protective cap of the coupler (2501) to be fully retracted into the mounting groove of the protective cap of the coupler under an external force;
or
a clamping groove of the protective cap of the coupler is provided on an outer wall of the protective cap of the coupler (23), and is configured to engage with the mounting groove of the coupler to form a locking groove.

12. The coupler according to claim 11, wherein the clamping part of the coupler is ring-shaped with an opening, the elastic clamp of the coupler further comprises two connection parts of the coupler which are respectively provided on both sides of the opening, and the connection part of the coupler has one end connected to the driving part of the coupler and the other end connected to a position of the clamping part of the coupler closing to the opening;
the mounting groove of the coupler comprises:
an annular groove of the coupler formed on the inner wall of the coupler, wherein the annular groove of the coupler and the clamping groove of the connector or the clamping groove of the protective cap of the coupler form a locking groove;
a passage groove of the coupler, wherein two passage grooves of the coupler which are spaced apart along a circumferential direction of the annular groove of the coupler, and the passage groove of the coupler is in communication with the annular groove of the coupler to adapt the connection part of the coupler to pass out from the passage groove of the coupler; and
an embedding groove of the coupler extending from an end surface of a docking end of the coupler body to the passage groove of the coupler to adapt the connection part of the coupler to access into the passage groove of the coupler via the embedding groove of the coupler;
or
the clamping part of the protective cap of the coupler (2501) is ring-shaped with an opening, the elastic clamp of the protective cap of the coupler (25) further comprises two connection parts of the protective cap of the coupler (2503) which are respectively provided on both sides of the opening, and the connection part of the protective cap of the coupler (2503) has one end connected to the driving part of the protective cap of the coupler (2502) and the other end connected to a position of the clamping part of the protective cap of the coupler (2501) at closing to the opening;
the mounting groove of the protective cap of the coupler comprises:
an annular groove of the protective cap of the coupler (2301) formed on the inner wall of the protective cap of the coupler, wherein the annular groove of the protective cap of the coupler (2301) engages with the clamping groove of the coupler (2011) to form a locking groove;
a passage groove of the protective cap of the coupler (2303), wherein two passage grooves of the protective cap of the coupler (2303) are spaced apart along a circumferential direction of the annular groove of the protective cap of the coupler (2301), and the passage groove of the protective cap of the coupler (2303) is in communication with the annular groove of the protective cap of the coupler (2301) to adapt the connection part of the protective cap of the coupler (2503) to pass out from the passage groove of the protective cap of the coupler (2303); and
an embedding groove of the protective cap of the coupler (2307) extending from an end surface of a docking end of the protective cap of the coupler to the passage groove of the protective cap of the coupler (2303) to adapt the connection part of the protective cap of the coupler (2503) to access into the passage groove of the protective cap of the coupler (2303) via the embedding groove of the protective cap of the coupler (2307).

13. The coupler according to claim 11 or 12, wherein the coupler body comprises:
an outer coupler end (20) comprising a main body thereof having an outer end through cavity, and a sleeve mounting cavity (2005) arranged at a first end of the main body of the outer coupler end, wherein the main body of the outer coupler end is adaptable to be docked with the prefabricated connector or the protective cap of the coupler (23), and the sleeve mounting cavity (2005) has one end extending into the outer end through cavity and the other end extending out of the outer end through cavity;
an inner coupler end (21) having an inner end through cavity thereon, wherein the inner end through cavity is adaptable for the sleeve mounting cavity (2005) to insert into the inner end through cavity when a first end of the inner coupler end (21) is connected to a first end of the outer coupler end (20), and a second end of the inner coupler end (21) is a male thread end; and
a lock nut (27) threadedly connected to the second end of the inner coupler end (21).

14. The coupler according to claim 13, further comprising: a stop nut (28) arranged on the second end of the inner coupler end (21), wherein a compression protrusion (2701) is provided on a side surface of the lock nut (27) facing the stop nut (28).

15. The coupler according to claim 13, wherein a sealing member is arranged between the outer coupler end (20) and the protective cap of the coupler.

16. The coupler according to claim 13, wherein an outer end flange plate (2001) is arranged at the first end of the main body of the outer coupler end, the sleeve mounting cavity (2005) is retained on the outer end flange plate (2001), two positioning holes (2002) surrounding the sleeve mounting cavity (2005) are provided on the outer end flange plate (2001), and the positioning holes (2002) are adaptable for insertion of the baffles (708) on the inner protective sleeve of the prefabricated connector (7); and
an inner end flange plate (2101) is arranged at the first end of the inner coupler end (21), and the inner coupler end (21) and the outer coupler end (20) are connected together by docking the outer end flange plate (2001) and the inner end flange plate (2101) .

17. A prefabricated connector assembly, comprising: the prefabricated connector according to any one of claims 1 to 9, and the coupler according to any one of claims 10 to 16.
